# EUROPEAN PATENT SPECIFICATION

(11) **EP 0 783 917 B1**
(45) Date of publication and mention of the grant of the patent: **22.05.2002**
(21) Application number: 96300218.3
(22) Date of filing: 11.01.1996
(51) Int. Cl.: B01D 53/86, B01J 23/50

(54) **Catalyst for catalytic reduction of nitrogen oxide and process for producing the same**
Katalysator zur katalytischen Reduktion von Stickoxiden und Verfahren zu seiner Herstellung
Catalyseur pour la réduction catalytique d'oxide d'azote et procédé pour sa fabrication

(43) Date of publication of application: 16.07.1997
(73) Proprietor: Isuzu Motors Limited, Shinagawa-ku, Tokyo 140 (JP)
(72) Inventor: Fujita, Tetsuya, c/o Isuzu Motors Ltd., Kawasaki-ku, Kawasaki-shi, Kanagawa-ken (JP)
(74) Representative: Sturt, Clifford Mark

(56) References cited:
- EP-A- 0 526 099
- WO-A-93/04774
- FR-A- 2 540 092

## Description

### Background of the Invention:

The present invention relates to a catalyst suitable for cleaning a nitrogen oxide-containing exhaust gas from a diesel engine or lean-burn type gasoline engine by catalytic reduction, and a process for producing it.

An exhaust gas from a motorcar contains harmful gases such as carbon monoxide (CO), hydrocarbons (HC) and nitrogen oxides (NOₓ). Recently, the regulation of the emission of such an exhaust gas has come to be strengthened. Under these circumstances, various processes for removing such a harmful gas are developed. For example, for cleaning an exhaust gas from a gasoline engine, a three way catalytic converter or a catalytic converter rhodium method wherein the air/fuel ratio is controlled at near the stoichiometric ratio (A/F = 14.6) and an Al₂O₃ catalyst carrying mainly Pt-Rh active component is used to oxidize CO and HC and also to reduce NOₓ, thereby removing them is most popular at present.

However, the three way catalytic converter or catalytic converter rhodium method has a defect that when oxygen is present in an excess amount, HC as the reducing agent is oxidized to make the reduction reaction of NOₓ therewith impossible, whereby the removal of NOₓ is seriously reduced. Thus, the three way catalytic converter or catalytic converter rhodium method could not be employed for removing the nitrogen oxides from exhaust gases from diesel engines or lean-burn type gasoline engines, since such exhaust gases contain an excess amount of oxygen.

Recently, a Cu-ZSM-5 catalyst and an alumina catalyst having NOₓ removing activity by using HC in the exhaust gas even in the presence of excess oxygen were reported. However, these catalysts are practically yet unsatisfactory, since the activity thereof is insufficient and durability thereof are not yet enough.

WO-A-93/04774 discloses a catalyst for the decomposition of nitrogen oxide containing silver on a carrier of alumina containing e.g. Ca.

### Summary of the Invention:

The object of the present invention is to provide a catalyst for catalytic reduction of nitrogen oxides, which is capable of efficiently removing nitrogen oxides from an exhaust gas from a diesel engine or lean-burn type gasoline engine by solving the above-described problems, and a process for producing it.

The inventor of the present invention has found that a catalyst comprising Ag alone or both Ag and Ir supported on γ-Al₂O₃ carrier containing a very small amount of Ca has excellent properties and is capable of efficiently removing nitrogen oxides in an exhaust gas even containing excess oxygen such as an exhaust gas from a diesel engine or lean-burn type gasoline engine.

Namely, the catalyst of the present invention for catalytic reduction of nitrogen oxides comprises Ag carried by a γ-Al₂O₃ carrier containing 0.1 to 1.0% by weight of Ca, which is obtained by coprecipitation of Ca and Al components. When the properties of removing NOₓ at varied temperature are to be controlled, Ir is also carried in addition to Ag.

The amount of Ag on the carrier is preferably about 1.0 to 5.0% by weight based on the carrier, and that of Ir is preferably below about 0.05% by weight based on the carrier.

The catalyst of the present invention for catalytic reduction of nitrogen oxides exhibits the activity of cleaning an NOₓ- containing exhaust gas by using HC remaining in the exhaust gas. When the amount of the reducing agent is insufficient, hydrocarbons such as gas oil can be added thereto. When the hydrocarbons such as gas oil are to be added, the position of the addition may be in the cylinder of the engine or in the course of the discharging path such as the exhaust gas manifold or exhaust gas pipe. The latter is particularly preferred.

It is important in the present invention that the γ-Al₂O₃ catalyst carrier contains a very small amount of Ca, in particular, 0.1 to 1.0% by weight of Ca. When the Ca component in the catalyst is coprecipitated with the Al component, a higher catalytic activity is obtained. On the contrary, when the single Ca component which is not coprecipitated is incorporated into γ-Al₂O₃, the activity of the catalyst tends to be reduced.

Therefore, in the production of the catalyst carrier used in the present invention, the commercially available γ-Al₂O₃ is not directly mixed with a Ca compound but an Al salt and a Ca salt are dissolved in water in such relative amounts that Ca content of the carrier will be 0.1 to 1.0% by weight or, alternatively, an aqueous Ca salt solution is added to an alumina sol (a colloidal solution of hydrated alumina) to control Ca content and an aqueous alkali solution, preferably ammonia water or an aqueous sodium hydroxide solution, is slowly added to control pH in an alkaline region near neutral, preferably 7 to 8, still preferably 7.1 to 7.6, thereby coprecipitating the Ca component and the Al component.

The Ca component which is not in the form of the coprecipitate but present solely must be removed from the coprecipitate by washing with ion-exchanged water. The coprecipitate thus obtained is dried and then burned at a temperature suitable for forming γ-Al₂O₃. In this step, the burning is conducted at 600 to 800°C (1112 to 1472°F) in air for 3 to 10 hours.

Ag alone or both Ag and Ir can be supported on the Ca component-containing γ-Al₂O₃ carrier by an ordinary method such as impregnation or precipitation method. When two kinds of the metals are to be supported, one of them is first supported and then the other can be supported or, alternatively, both of them can be supported at the same time.

As for the amount of the catalyst metal, Ag is used in an amount of 1.0 to 5.0% by weight, based on the carrier, and Ir may be as small as not larger than 0.05% by weight based on the carrier. The amounts of the catalyst metals are preferably in these ranges, since when the amount of the metal is insufficient, the catalytic effect cannot be obtained and, on the contrary, when it is excess, the NOₓ-removing activity is reduced and the production cost is increased. Although a high cleaning effect can be obtained even when only Ag is used as the active component, the temperature for obtaining the catalytic action is shifted to a low temperature side in the presence of Ir advantageously. In addition, since Ir is effective in improving the thermal resistance of Ag as the active component, the catalytic activity is scarcely lowered by the deterioration by heat when Ag is used in combination with Ir. The mechanism of this phenomenon is supposed to be that the dispersibility of Ag is improved in the presence of Ir to prevent the increase of the Ag particle diameter by heat (sintering).

The carrier thus carrying the metal is burned suitably in air, in an inert atmosphere such as nitrogen gas atmosphere or a reducing atmosphere such as hydrogen gas atmosphere. The carrier carrying Ag is burned at 600 to 800°C (1112 to 1472°F) in air for several hours. When the carrier carries Ir, it is preferably burned at 600 to 800°C (1112 to 1472°F) in air or nitrogen for several to dozens of hours.

The catalyst of the present invention can be used as it is or after mixing it with a suitable binder to form a desired shape such as pellets or spheres. Alternatively, the catalyst can be applied to a ceramic such as honeycomb-shaped cordierite or mullite or to the surface of a metal such as stainless steel with a suitable binder to form a coating.

The catalyst of the present invention is capable of catalytically reducing nitrogen oxides in an exhaust gas containing an excess amount of oxygen such as an exhaust gas from a diesel engine or lean-burn type gasoline engine into harmless nitrogen by using HC in the exhaust gas as the reducing agent. In this step, HC used as the reducing agent is oxidized into harmless CO₂ and H₂O.

Although the function of the Ca component in the catalyst carrier of the present invention has not been fully elucidated yet, it is supposed that since the acid properties (acid strength and quantity) of the alumina catalyst participate in the NOₓ-reducing reaction, the acid properties of alumina are made suitable for the NOₓ-reducing reaction by the dispersion of Ca which is an alkaline earth metal in alumina. As a result, the Ca component exerts an influence on the mutual effect of γ-Al₂O₃ and the metal carried thereon to improve the catalytic activity. Thus, the selectivity towards the reaction of nitrogen oxide NOₓ and reducing agent HC is improved to an extent higher than that obtained when γ-Al₂O₃ is used singly.

### Brief Description of the Drawings:

Fig. 1 is a characteristic chart showing the catalyst temperature-NOₓ-removing rate which shows the relationship between the Examples of the present invention and Comparative Examples;
Fig. 2 is a characteristic chart showing the relationship between the amount of Ag carried by the catalyst of the present invention and NOₓ-removing rate;
Fig. 3 is a characteristic chart showing the relationship between the amount of Ir carried by the catalyst of the present invention and NOₓ-removing rate; and
Fig. 4 is a characteristic chart showing the relationship between the heating time and NOₓ-removing rate obtained when the catalyst of the present invention carrying only Ag or that carrying both Ag or Ir is used.

### Detailed Description of the Preferred Embodiments:

The following Examples will further illustrate the present invention, which by no means limit the invention.

### Example 1:

367.9 g of alumina nitrate nonahydrate [Al(NO₃)₃·9H₂O] and 23.4 g of calcium nitrate tetrahydrate [Ca(NO₃)₂·4H₂O] were added to 1.1 ℓ of ion-exchanged water in a 2 ℓ beaker, and the resultant mixture was stirred at room temperature to obtain a solution. Then 0.5 ml/min of 25% ammonia water was slowly dropped into the solution under vigorous stirring. The precipitation started at around pH 4 and the dropping of the ammonia water was further continued. When pH had reached 7.1 to 7.6, the dropping of the ammonia water was stopped and the reaction mixture was observed. When pH lowered to below 7.1, a small amount of ammonia water was further dropped to stabilize pH in the range of 7.1 to 7.6.

After aging by leaving the reaction mixture to stand overnight, the precipitate was taken by filtration and then washed by adding it into about 1.2 ℓ of ion-exchanged water. After the filtration followed by washing and filtration three times, the precipitate was dried at 110°C (230°F) for a whole day and night and finally burned in air at 600°C (1112°F) for 3 h to obtain an alumina/calcia carrier. The alumina/calcia carrier had a Ca content of 0.3% by weight.

The alumina/calcia carrier thus obtained was immersed in an aqueous silver nitrate solution (concentration: 1.0% by weight) and then evaporated to dryness with a rotary evaporator. The carrier was dried at 110°C (230°F) for a whole day and night and burned in air at 700°C (1292°F) for 3 h to obtain an alumina/calcia carrier carrying Ag. The alumina/calcia carrier carried 2.0% by weight, based on the carrier, of Ag.

### Example 2:

The alumina/calcia catalyst carrying Ag, obtained in Example 1, was immersed in an aqueous iridium chloride solution (IrCl₄ concentration: 0.1% by weight) and the whole was left to stand overnight. After evaporation to dryness with a rotary evaporator, the product was burned in air at 700°C (1292°F) for 3 h to obtain an alumina/calcia carrier carrying Ag and Ir. The alumina/calcia carrier carried 0.01% by weight, based on the carrier, of Ir.

### Example 3:

The same procedure as that of Example 2 was repeated except that the amount of carried Ir was changed to 0.05% by weight to obtain an alumina/calcia catalyst carrying both Ag and Ir.

### Comparative Example 1:

The same procedure as that of Example 1 was repeated except that the alumina/calcia carrier was replaced with a commercially available γ-alumina ACE-2 or ACBM-1 (each a product of CATALYSTS & CHEMICALS INDUSTRIES CO., LTD.) or KHD-24 (a product of SUMITOMO CHEMICAL CO., LTD.) to obtain the alumina catalyst carrying Ag.

### Comparative Example 2:

γ-alumina (ACE-2; a product of CATALYSTS & CHEMICALS INDUSTRIES CO., LTD.) was immersed in an aqueous silver nitrate solution and aqueous calcium nitrate solution each having such a concentration that 2% by weight of Ag and 10% by weight of CaO would be carried, and then evaporated to dryness with a rotary evaporator. After drying in air at 110°C (230°F) followed by burning in air at 700°C (1292°F) for 3 h, the alumina carrier carrying both Ag and CaO was obtained.

### Comparative Example 3:

The same procedure as that of Example 1 was repeated except that the aqueous silver nitrate solution was replaced with an aqueous cobalt acetate solution, aqueous chloroplatinic acid solution, aqueous palladium chloride solution or aqueous rhodium chloride solution and that the amount of the metals were changed to 0.5% by weight of Co, 2% by weight of Pt, 2% by weight of Pd or 0.05% by weight of Rh to obtain the alumina/calcia catalyst carrying Co, alumina/calcia catalyst carrying Pt, alumina/calcia catalyst carrying Pd or alumina/calcia catalyst carrying Rh.

### Comparative Example 4:

An example wherein the catalyst carrier which is not the coprecipitate is used is given. γ-alumina (ACE-2; a product of CATALYSTS & CHEMICALS INDUSTRIES CO., LTD.) was immersed in an aqueous calcium nitrate solution (concentration: 1.0% by weight) having such a concentration that 0.5% by weight, based on the alumina, of Ca would be carried, and then evaporated to dryness with a rotary evaporator. After burning in air at 700°C (1292°F) for 3 h, the alumina/calcia carrier was obtained. Then the same procedure as that of Example 1 was repeated except that the alumina calcia carrier thus obtained was used to obtain the alumina/calcia catalyst carrying Ag.

### Test on nitrogen oxide-removing capacity of catalyst:

Each of the catalysts obtained as described above was used in the form of pellets having a diameter of 1 to 3 mm. The nitrogen oxide-removing capacity of the pellets was examined in a model gas of an exhaust gas of diesel engine (comprising 1,000 ppm of NO, 10 v/v % of O₂, 800 ppm of C₃H₈ and the balance of N₂) at a temperature of 300 to 600°C (572 to 1112°C) and at an SV of 50,000 h⁻¹. C₃H₈ acted as the reducing agent.

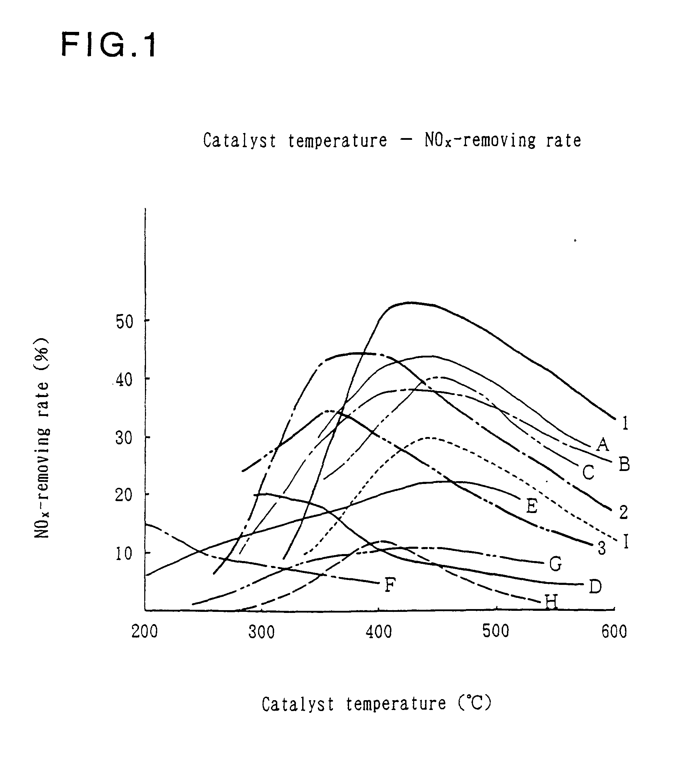

The results thus obtained are shown in Fig. 1. It is apparent from Fig. 1 that the catalyst comprising Ag carried by the γ-Al₂O₃ containing a very small amount of Ca in Example 1 (see curve 1) generally exhibited a catalytic activity higher than that of the catalyst comprising Ag carried by the Ca-free γ-alumina in Comparative Example 1 [the curve A shows the results obtained by using γ-alumina ACE-2 (a product of CATALYSTS & CHEMICALS INDUSTRIES CO., LTD.), the curve B shows those obtained by using γ-alumina ACBM-1 (a product of CATALYSTS & CHEMICALS INDUSTRIES CO., LTD.) and the curve C shows those obtained by using γ-alumina KHD-24 (a product of SUMITOMO CHEMICAL CO., LTD.).

When the catalyst carrying 0.01% by weight of Ir in addition to Ag obtained in Example 2 was used (see curve 2), the relatively high NOₓ-removing rate could be kept even in a lower temperature zone, though the rate in a high temperature zone was lower than that obtained with the catalyst produced in Example 1. When the catalyst carrying 0.05% by weight of Ir in addition to Ag obtained in Example 3 was used (see curve 3), the adaptability thereof to the lower temperature zone was superior to that of the catalyst produced in Example 2.

On the other hand, the catalyst obtained in Comparative Example 2 carrying a large amount of Ca on the alumina surface (see curve D) had a poor nitrogen oxide-removing capacity which was below a practical level. Further, the alumina/calcia catalysts produced in Comparative Example 3 and carrying Co, Pt, Pd or Rh (see curves E, F, G and H showing the results obtained with the carriers carrying Co, Pt, Pd and Rh, respectively) had poor nitrogen oxide-removing capacities which were below a practical level.

No improvement in the catalytic activity was recognized when the catalyst comprising the carrier produced by a method other than the coprecipitation method in Comparative Example 4 was used (see curve I) even though it contained a very small amount (0.5% by weight) of the Ca component. No practical activity-temperature relationship could be obtained, since the activity particularly in the low temperature zone was low.

No substantial difference in the specific surface area was found between the alumina/calcia carriers of the present invention and the three commercial products used in Comparative Example 1, since all of them was in the range of 205 to 240 m²/g. Therefore, supposedly, no substantial difference lies among the specific surface areas in the contribution on the nitrogen oxide-removing capacity. Thus, the presence of a very small amount of Ca in γ-alumina is important for improving the nitrogen oxide-removing capacity.

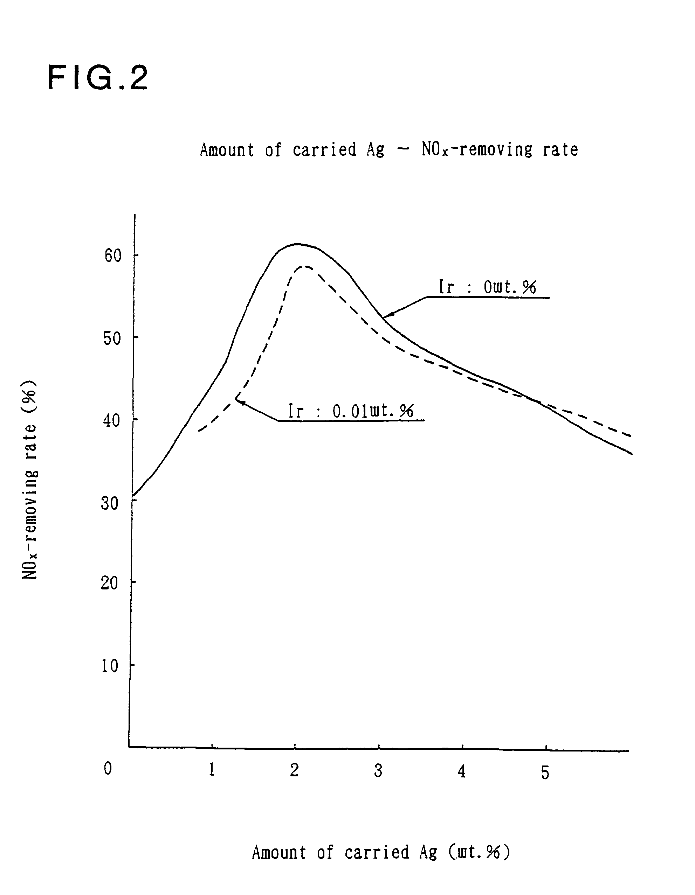

The description will be made on the influence of the amounts of Ag and Ir carried by the carrier on the NOₓ-removing rate. To elucidate the relationship between the amount of carried Ag and the NOₓ-removing rate, the NOₓ-removing capacity was determined by varying the amount of carried Ag in two test groups, i.e. a group wherein Ir-free catalyst was used and the other group wherein the carrier carrying 0.01% by weight of Ir was used. The test conditions comprised SV of 30,000 h⁻¹, NO content of 1,000 ppm, O₂ content of 13 v/v %, H₂O content of 10 v/v % and HC (gas oil) content of 6,000 ppm C. The test results are shown in Fig. 2. It was understood from Fig. 2 that the maximum cleaning rate was obtained when the amount of carried Ag was 2% by weight and that the cleaning rate was considerably lowered when it was below 1% by weight or above 5% by weight.

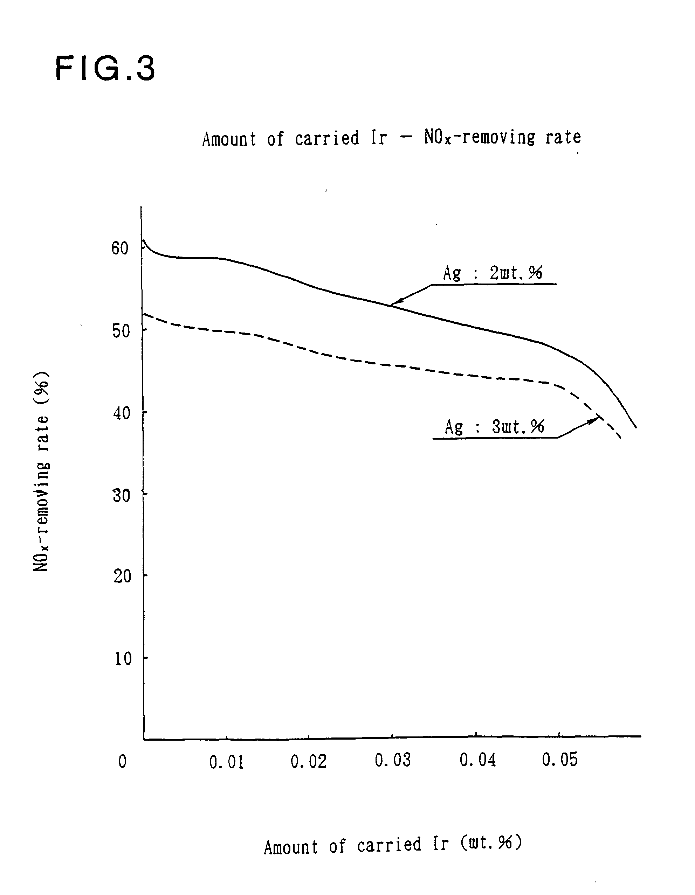

To elucidate the relationship between the amount of carried Ir and the NOₓ-removing rate, the NOₓ-removing capacity was determined by varying the amount of carried Ir in two test groups wherein the carrier carried 2% by weight and 3% by weight of Ag, respectively. The test conditions comprised SV of 30,000 h⁻¹, NO content of 1,000 ppm, O₂ content of 13 v/v %, H₂O content of 10 v/v % and HC (gas oil) content of 6,000 ppm C. The test results are shown in Fig. 3. It was understood from Fig. 3 that although the cleaning rate was gradually lowered as the amount of carried Ir was increased, the lowering of the catalytic activity could be controlled to a relatively small level while the amount of Ir was not larger than about 0.05% by weight and that since the activity temperature can be shifted to a lower temperature side by Ir, no particular disadvantage is caused by Ir so far as the amount thereof is in the above-described range.

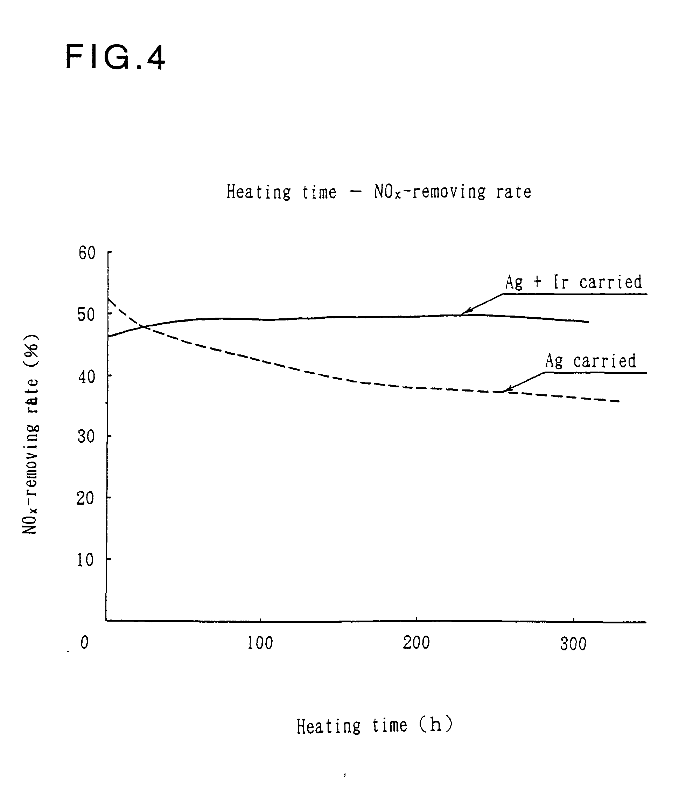

To prove the above-described fact that Ir acts to improve the thermal resistance of the alumina/calcia catalyst carrying Ag, thermal resistance tests were conducted in two test groups wherein the carrier carried only Ag and both Ag and Ir, respectively. In the test, the catalysts were heated to 700°C (1292°F) in air to determine the change in the NOₓ-removing rate with heating time. The test conditions comprised SV of 50,000 h⁻¹, NO content of 1,000 ppm, O₂ content of 10 v/v %, C₃H₆ content of 800 ppm and the balance of N₂. The test results are shown in Fig. 4. It was understood from Fig. 4 that until about 20 h after the start, the cleaning capacity of the catalyst carrying only Ag was higher but after that, the catalyst carrying both Ag and Ir could keep its higher cleaning capacity.

Since the catalyst of the present invention for the catalytic reduction of nitrogen oxides comprises Ag alone or both Ag and Ir carried by the carrier compound of γ-Al₂O₃ containing Ca in an amount of as small as 0.1 to 1.0% by weight as described above, the selectivity to ward the reaction of the nitrogen oxides and the reducing agent is accelerated and, therefore, the nitrogen oxides in an exhaust gas containing an excess amount of oxygen such as an exhaust gas from a diesel engine or lean-burn type gasoline engine can be efficiently removed.

Further, since the activity-temperature relationship of the catalyst can be varied by controlling the amount of Ir carried by the carrier, the optimum catalyst for the catalytic reduction of nitrogen oxides can be provided depending on the kind of the engine and using conditions thereof.

## Claims

1. A catalyst for catalytic reduction of nitrogen oxides, which comprises Ag carried by a γ-Al₂O₃ carrier containing 0.1 to 1.0% by weight of Ca, which is obtained by coprecipitation of Ca and Al components.

2. A catalyst for catalytic reduction of nitrogen oxides according to Claim 1, **characterised in that** the carrier carries Ir in addition to said Ag.

3. A catalyst for catalytic reduction of nitrogen oxides according to Claim 1 or 2, **characterised in that** the amount of said carried Ag is 1.0 to 5.0% by weight based on the carrier.

4. A catalyst for catalytic reduction of nitrogen oxides according to Claim 2, **characterised in that** the amount of said carried Ir is not larger than 0.05% by weight based on the carrier.

5. A process for producing a catalyst for catalytic reduction of nitrogen oxides, which comprises the steps of dissolving an Al salt and a Ca salt in a solvent, controlling pH of the obtained solution in an alkaline zone to coprecipitate the Ca component and the Al component, removing the Ca component other than that forming the coprecipitate from the obtained solution containing the coprecipitate, drying the coprecipitate, burning the dried coprecipitate and supporting Ag on the carrier thus obtained.

6. A process for producing a catalyst for catalytic reduction of nitrogen oxides according to Claim 5, **characterised in that** the step of dissolving the Al salt and the Ca salt in the solvent is replaced with a step of dissolving the Ca salt in an alumina sol.

7. A process for producing a catalyst for catalytic reduction of nitrogen oxides according to Claim 5, **characterised in that** in the step of supporting Ag on the carrier, Ir is also supported in addition to Ag.

8. A process for producing a catalyst for catalytic reduction of nitrogen oxides according to Claim 5, **characterised in that** the Al salt is aluminum nitrate.

9. A process for producing a catalyst for catalytic reduction of nitrogen oxides according to Claim 5 or Claim 6 **characterised in that** the Ca salt is calcium nitrate.

10. A process for producing a catalyst for catalytic reduction of nitrogen oxides according to Claim 5, **characterised in that** pH in the alkaline zone is pH 7 to 8 in the step of coprecipitating the Ca component and the Al component.

11. A process for producing a catalyst for catalytic reduction of nitrogen oxides according to Claim 5, **characterised in that** the burning temperature in the step of burning the coprecipitate is 600 to 800°C.

12. A process for producing a catalyst for catalytic reduction of nitrogen oxides according to Claim 5, **characterised in that** the step of supporting Ag on the carrier means the step of immersing the carrier in an aqueous silver nitrate solution and then evaporating the solution to dryness.

13. A process for producing a catalyst for catalytic reduction of nitrogen oxides according to Claim 7, **characterised in that** the step of supporting Ir on the carrier means the step of immersing the carrier in an aqueous iridium chloride solution and then evaporating the solution to dryness.

## Patentansprüche

1. Katalysator für die katalytische Reduktion von Stickstoffoxiden, welcher Ag enthält, das von einem 0,1 bis 1,0 Gew.-% Ca enthaltenden γ-Al₂O₃-Träger getragen wird, der durch Kopräzipitation von Ca- und Al-Verbindungen erhalten wurde.

2. Katalysator für die katalytische Reduktion von Stickstoffoxiden nach Anspruch 1, **dadurch gekennzeichnet, daß** der Träger zusätzlich zu dem Ag Ir trägt.

3. Katalysator für die katalytische Reduktion von Stickstoffoxiden nach Anspruch 1 oder 2, **dadurch gekennzeichnet, daß** die Menge des getragenen Ag auf der Grundlage des Trägers 1,0 bis 5,0 Gew.-% beträgt.

4. Katalysator für die katalytische Reduktion von Stickstoffoxiden nach Anspruch 2, **dadurch gekennzeichnet, daß** die Menge des getragenen Ir auf der Grundlage des Trägers nicht größer ist als 0,05 Gew.-%.

5. Verfahren zur Herstellung eines Katalysators für die katalytische Reduktion von Stickstoffoxiden, mit den Stufen, in denen man ein Al-Salz und ein Ca-Salz in einem Lösungsmittel löst, den pH-Wert der erhaltenen Lösung in einem alkalischen Bereich einstellt, um die Ca-Verbindung und die Al-Verbindung zu kopräzipitieren, die Ca-Verbindung entfernt, welche nicht diejenige ist, die das Kopräzipitat aus der erhaltenen Lösung, welche das Kopräzipitat enthält, bildet, das Kopräzipitat trocknet, das getrocknete Kopräzipitat brennt und Ag auf den so erhaltenen Träger aufbringt.

6. Verfahren zur Herstellung eines Katalysators für die katalytische Reduktion von Stickstoffoxiden nach Anspruch 5, **dadurch gekennzeichnet, daß** die Stufe des Lösens des Al-Salzes und des Ca-Salzes in dem Lösungsmittel durch eine Stufe des Lösens des Ca-Salzes in einem Aluminiumoxidsol ersetzt ist.

7. Verfahren zur Herstellung eines Katalysators für die katalytische Reduktion von Stickstoffoxiden nach Anspruch 5, **dadurch gekennzeichnet, daß** in der Stufe, bei welcher Ag auf den Träger aufgebracht wird, zusätzlich zu Ag auch Ir aufgebracht wird.

8. Verfahren zur Herstellung eines Katalysators für die katalytische Reduktion von Stickstoffoxiden nach Anspruch 5, **dadurch gekennzeichnet, daß** das Al-Salz Aluminiumnitrat ist.

9. Verfahren zur Herstellung eines Katalysators für die katalytische Reduktion von Stickstoffoxiden nach Anspruch 5 oder Anspruch 6, **dadurch gekennzeichnet, daß** das Ca-Salz Calciumnitrat ist.

10. Verfahren zur Herstellung eines Katalysators für die katalytische Reduktion von Stickstoffoxiden nach Anspruch 5, **dadurch gekennzeichnet, daß** der pH-Wert in dem alkalischen Bereich in der Stufe, bei der die Ca-Verbindung und die AI-Verbindung kopräzipitiert werden, ein pH-Wert von 7 bis 8 ist.

11. Verfahren zur Herstellung eines Katalysators für die katalytische Reduktion von Stickstoffoxiden nach Anspruch 5, **dadurch gekennzeichnet, daß** die Brenntemperatur in der Stufe, bei der das Kopräzipitat gebrannt wird, 600 bis 800°C beträgt.

12. Verfahren zur Herstellung eines Katalysators für die katalytische Reduktion von Stickstoffoxiden nach Anspruch 5, **dadurch gekennzeichnet, daß** die Stufe des Aufbringens von Ag auf den Träger die Stufe bedeutet, in der man den Träger in eine wäßrige Silbemitratlösung eintaucht und dann die Lösung zur Trockene verdampft.

13. Verfahren zur Herstellung eines Katalysators für die katalytische Reduktion von Stickstoffoxiden nach Anspruch 7, **dadurch gekennzeichnet, daß** die Stufe des Aufbringens von lr auf den Träger die Stufe bedeutet, bei der man den Träger in eine wäßrige Iridiumchloridlösung eintaucht und dann die Lösung zur Trockene verdampft.

## Revendications

1. Catalyseur pour la réduction catalytique d'oxydes d'azote, qui comprend du Ag supporté par un support en γ-Al₂O₃ contenant 0,1 à 1,0 % en poids de Ca, qui est obtenu par co-précipitation de composants de Ca et Al.

2. Catalyseur pour la réduction catalytique d'oxydes d'azote selon la revendication 1, **caractérisé en ce que** le support supporte du Ir en plus dudit Ag.

3. Catalyseur pour la réduction catalytique d'oxydes d'azote selon la revendication 1 ou 2, **caractérisé en ce que** la quantité dudit Ag supporté est de 1,0 à 5,0 % en poids par rapport au support.

4. Catalyseur pour la réduction catalytique d'oxydes d'azote selon la revendication 2, **caractérisé en ce que** la quantité dudit Ir supporté n'est pas supérieure à 0,05 % en poids par rapport au support.

5. Procédé pour produire un catalyseur pour la réduction catalytique d'oxydes d'azote, qui comprend les étapes de dissolution d'un sel de Al et d'un sel de Ca dans un solvant, de contrôle du pH de la solution obtenue dans une zone alcaline pour co-précipiter le composant de Ca et le composant de Al, d'élimination du composant de Ca autre que celui formant le co-précipité de la solution obtenue contenant le co-précipité, de séchage du co-précipité, de brûlage du co-précipité séché et de support du Ag sur le support ainsi obtenu.

6. Procédé pour produire un catalyseur pour la réduction catalytique d'oxydes d'azote selon la revendication 5, **caractérisé en ce que** l'étape de dissolution du sel de Al et du sel de Ca dans le solvant est remplacée par une étape de dissolution du sel de Ca dans un sol d'aluminium.

7. Procédé pour produire un catalyseur pour la réduction catalytique d'oxydes d'azote selon la revendication 5, **caractérisé en ce que**, dans l'étape de support de Ag sur le support, du Ir est aussi supporté en plus du Ag.

8. Procédé pour produire un catalyseur pour la réduction catalytique d'oxydes d'azote selon la revendication 5, **caractérisé en ce que** le sel de Al est du nitrate d'aluminium.

9. Procédé pour produire un catalyseur pour la réduction catalytique d'oxydes d'azote selon la revendication 5 ou la revendication 6, **caractérisé en ce que** le sel de Ca est du nitrate de calcium.

10. Procédé pour produire un catalyseur pour la réduction catalytique d'oxydes d'azote selon la revendication 5, **caractérisé en ce que** le pH dans la zone alcaline est un pH de 7 à 8 dans l'étape de co-précipitation du composant Ca et du composant Al.

11. Procédé pour produire un catalyseur pour la réduction catalytique d'oxydes d'azote selon la revendication 5, **caractérisé en ce que** la température de brûlage dans l'étape de brûlage du co-précipité est de 600 à 800°C.

12. Procédé pour produire un catalyseur pour la réduction catalytique d'oxydes d'azote selon la revendication 5, **caractérisé en ce que** l'étape de support du Ag sur le support signifie l'étape d'immersion du support dans une solution aqueuse de nitrate d'argent et ensuite d'évaporation de la solution à siccité.

13. Procédé pour produire un catalyseur pour la réduction catalytique d'oxydes d'azote selon la revendication 7, **caractérisé en ce que** l'étape de support de Ir sur le support signifie l'étape d'immersion du support dans une solution aqueuse de chlorure d'iridium et ensuite d'évaporation de la solution à siccité.
